# FASCICULE DE BREVET EUROPEEN

(11) **EP 0 718 769 B1**
(45) Date de publication et mention de la délivrance du brevet: **10.03.1999**
(21) Numéro de dépôt: 95402821.3
(22) Date de dépôt: 14.12.1995
(51) Int. Cl.: G06F 12/14

(54) **Dispositif de protection de l'accès à des mots mémoires**
Speicherwörterzugangsschutzvorrichtung
Apparatus for memory word access protection

(30) Priorité: 20.12.1994 FR 9415347
(43) Date de publication de la demande: 26.06.1996
(73) Titulaire: STMicroelectronics S.A., 94250 Gentilly (FR)
(72) Inventeur: Lisart, Mathieu, F-75116 Paris (FR); Sourgen, Laurent, F-75116 Paris (FR)
(74) Mandataire: Schmit, Christian Norbert Marie

(56) Documents cités:
- EP-A- 0 416 211
- FR-A- 2 621 409
- FR-A- 2 661 532

## Description

La présente invention a pour objet un dispositif de protection de l'accès à des mots mémoires d'un système à microprocesseur, notamment d'un circuit intégré à microprocesseur. L'invention concerne plus particulièrement le domaine des cartes à circuit intégré, dites cartes à puces, utilisables dans le domaine bancaire, dans le domaine de la communication ainsi que de plus en plus fréquemment dans de multiples autres domaines.

Les systèmes à microprocesseur incorporés sur des circuits intégrés subissent au cours de leur fabrication plusieurs étapes. Au cours d'une première étape, dite de fabrication, le fabricant de circuits intégrés mémorise dans des mémoires programmes de ce circuit intégré un système d'exploitation permettant d'effectuer un certain nombre d'opérations (consistant essentiellement à écrire, lire ou effacer des zones mémoires) ainsi qu'à limiter certaines autres opérations (notamment dans le cas des cartes de type bancaire où dès le départ on sait que certaines utilisations seront interdites). Une fois que les circuits intégrés ont été fabriqués, ils sont livrés à un organisme, appelé couramment émetteur. Celui-ci les met en service auprès de ses adhérents, pour une banque il s'agit de ses clients, après avoir programmé une mémoire programme. De préférence le circuit intégré est monté sur une carte. Le programme contenu dans cette mémoire programme est susceptible de permettre, par le déroulement des instructions correspondantes, une utilisation particulière de la carte. Par exemple le programme pourra autoriser les retraits en espèces auprès de distributeurs automatiques de billets de banque. Un autre service pourra concerner la constitution automatique d'un crédit pour certains porteurs de carte privilégiés. Un autre service peut encore être l'utilisation de la carte comme porte-monnaie électronique.

La diversité de ces services et leur mise en place progressive dans le temps impliquent une gestion rigoureuse des actions possibles avec la carte. La mise en place progressive concerne le fait que, un client devenant plus fidèle, l'émetteur, sa banque, décide de lui octroyer une nouvelle faculté: utiliser un nouveau service. La mise en place progressive peut également concerner la coexistence d'applications de types différents sur une même carte à puce. En effet, on admet actuellement que l'utilisation d'une seule carte pour gérer un seul type de services (bancaires) est un système onéreux et par ailleurs peu pratique alors qu'il conviendrait de pouvoir insérer sur une même carte plusieurs utilisations: par exemple enregistrer dans les mémoires de la carte le dossier médical du porteur afin qu'il puisse utiliser son dossier lorsqu'il se rend à l'hôpital.

La coexistence de différents services fait naître des risques supplémentaires. Il importe d'empêcher que par une action ultérieure consistant à mettre en oeuvre une nouvelle application, on vienne s'autoriser indûment la modification d'applications anciennes ou même la lecture d'un code opératoire régissant une autre application. Par exemple, certaines des informations stockées dans les mémoires de la carte doivent être protégées de manière définitive. Ces informations concernent bien naturellement le code secret de la carte qui ne doit pas être modifié, ou seulement sous certaines conditions strictes. Il concerne également des indications d'identification de la carte: numéro de série, classe d'appartenance à un système de cryptographie. Mais les informations qu'il ne faut pas modifier, perturber ou lire peuvent également concerner les mémoires programmes, notamment celles contenant le système d'exploitation de la carte. Autant certaines des informations stockées en mémoire de la carte sont, dès le départ, des informations qu'il conviendra de préserver, autant certaines ne le deviendront que progressivement, au moment de l'utilisation de la carte pour une autre application, ou même ne le deviendront que partiellement: leur modification étant entourée d'un certain nombre de conditions restrictives.

Pour résoudre les problèmes de sécurité inhérents à cette évolution il est connu d'affecter chaque mot mémoire à protéger d'un code de protection relatif à son aptitude à être lu, écrit ou effacé. Au moment de l'accès à un tel mot mémoire on lit simultanément son code de protection et on autorise ou non l'action envisagée en fonction de ce code. Ce type de solution présente les inconvénients suivants.

D'une part ce n'est pas souple. En effet, on peut vouloir autoriser une action donnée, par exemple la lecture, dans certaines conditions et pas dans d'autres. Ne jouissant que d'une faculté d'autoriser ou d'interdire la lecture il est impossible de se servir de ce code à cet effet. Deuxièmement, affecter un mot de contrôle à chaque mot mémoire est pénalisant en terme d'occupation de la mémoire. Le mot de contrôle comportant au moins un octet, 8 bits, les capacités de stockage de la mémoire sont proportionnellement réduites. Enfin et surtout ce système présente l'inconvénient que sa mise en oeuvre est effectuée par logiciel.

Le microprocesseur reçoit en effet les bits de ce mot de contrôle et doit normalement en tenir compte pour autoriser ou interdire l'action. Ce mode de fonctionnement est cependant lié à la cohérence de la prise en compte de ces mots de contrôle. Par erreur ou par fraude on peut ne pas en tenir compte et faire perdre au système toute sa sécurité.

Pour résoudre ce type de problème, le demandeur a déposé le 2 octobre 1987 une demande de brevet français N° 87 13936 publiée sous le N° 2 621 409 (THOMSON SEMICONDUCTORS) préconisant un fonctionnement différent. Pour augmenter sa souplesse il a été constaté que le caractère utilisable ou non de certains mots mémoires était lié à l'instruction de traitement à laquelle allait être soumis ce mot. Par exemple une lecture du code secret de la carte et son transfert sous une forme ou une autre à un registre du microprocesseur doivent être autorisés. En effet au moment de la comparaison avec un code secret frappé au clavier par un utilisateur, il faut bien disposer du code secret de la carte pour faire la comparaison. Par contre, la lecture et l'édition de ce code secret sur l'écran d'un terminal doivent être interdites. En conséquence la lecture du code est autorisée dans certains cas (pour la comparaison) et pas dans d'autres (pour l'édition).

Dans le système décrit dans cette demande de brevet on se sert du fait qu'un microprocesseur fonctionne essentiellement en appliquant une instruction (un code instruction) à des données. On avait alors imaginé de réaliser une matrice ou table de décision recevant en première entrée une adresse d'une instruction ou d'un code instruction et, en deuxième entrée, une adresse d'une donnée à traiter par cette instruction. Compte tenu de ce que toutes les adresses pouvaient ne pas être émises simultanément, il convenait par ailleurs de stocker temporairement l'adresse de l'instruction (ou de la donnée), plus exactement du code opératoire de l'instruction (ou de l'opérande pour la donnée), pour la présenter en temps utile à la table de décision. Ce faisant la table recevant en entrée ces deux signaux d'adresse délivrait un signal d'autorisation ou d'interdiction de l'exécution de l'instruction sur la donnée. La particularité de la table de décision de cette demande de brevet était qu'elle était réalisée sous forme de circuit, de préférence non modifiable, au moins après les premiers stades de la fabrication. On résolvait ainsi les trois problèmes évoqués précédemment.

Cependant cette solution bien qu'elle soit très efficace présente une souplesse d'utilisation encore insuffisante. En effet, le caractère figé (notamment par masque) de la table de décision apporte à la fois sa sécurité et son impossibilité à évoluer. Dans la présente invention on va améliorer cette souplesse tout en conservant par ailleurs le caractère solide de la sécurité: celui qui est lié au fait que la table est réalisée sous forme d'un circuit câblé (éventuellement programmable au moment de la fabrication) dont le fonctionnement est particulièrement sûr car il ne peut plus être détourné.

Dans l'invention on a complété l'adressage de la table avec des adresses par un adressage avec des informations contenues dans des mots de contrôle associés à des mots à protéger. Ceux-ci viennent paramétrer la table utilisée. En pratique, un terme sélectionné dans la table (et donc le signal qu'il produit) est dépendant d'une part de l'adresse (ou des adresses) de l'instruction et/ou du mot à protéger, et des bits de contrôle contenus dans un mot de contrôle affecté à ce mot à protéger. Selon la valeur de ces bits on pourra choisir une sous table, ou une autre, dans un jeu de sous tables conduisant ainsi à définir plusieurs scénarios possibles de protection. De préférence on organise même une hiérarchie dans les scénarios de protection. Le scénario de départ, correspondant à un mot de contrôle le plus permissif, permettant plus d'opérations sur les différents mots qu'un scénario ultérieur. Le mot de contrôle comportera alors de préférence des moyens pour ne pouvoir évoluer que dans un sens limitant de plus en plus sa permissivité. On jouit alors de la souplesse recherchée en affectant à des données nouvelles créées dans le système des mots de contrôle voulus. Par ailleurs pour les mots de contrôle anciens, on choisit de ne pouvoir les faire évoluer que dans un sens plus restrictif.

EP-A- 2 661 532 (SGS-THOMSON) décrit un système où aux mots à protéger sont affectés des bits de contrôle pour choisir parmi plusieurs scénarios possibles de protection. Cependant ces scénarios sont pour un système avec validation d'un code d'accès et non avec une table de décision adressée par des adresses de mémoires.

L'invention aura donc pour objet un dispositif de protection de l'accès à des mots mémoires d'un circuit intégré à microprocesseur qui comporte
- un microprocesseur,
- un ensemble de mémoires comportant ces mots,
- un bus de transmission de données, d'adresses et de commandes entre ce microprocesseur et ces mémoires,
- un circuit de protection de l'accès à ces mots mémoires muni d'une table de décision, de circuits d'adressage de cette table avec des adresses de ces mots mémoires, et d'un circuit d'autorisation pour produire un signal de protection en fonction de la lecture de la table,
caractérisé en ce qu'il comporte
- affecté à certains mots à protéger un ensemble de bits de contrôle,
- un circuit pour lire ces bits de contrôle au moment de la lecture de ces mots, et
- un circuit pour adresser la table de décision en fonction desdites adresses de mots mémoires et en fonction de la valeur des bits lus, qui permettent de choisir différents modes de protection dans la table.

L'invention sera mieux comprise à la lecture de la description qui suit et à l'examen des figures qui l'accompagnent. Celles-ci ne sont données qu'à titre indicatif et nullement limitatif de l'invention. Les figures montrent:
- Figure 1: un dispositif de protection conforme à l'invention;
- Figures 2a à 2c: une représentation schématique des différents types de scénarios envisageables dans l'invention;
- Figure 3: une représentation préférée d'un mot de contrôle sous la forme d'un octet;
- Figures 4a à 4c: des représentations détaillées d'exemples de scénarios utilisables;
- Figures 5a à 5c: des modes pratiques de réalisation de la table de décision de l'invention.

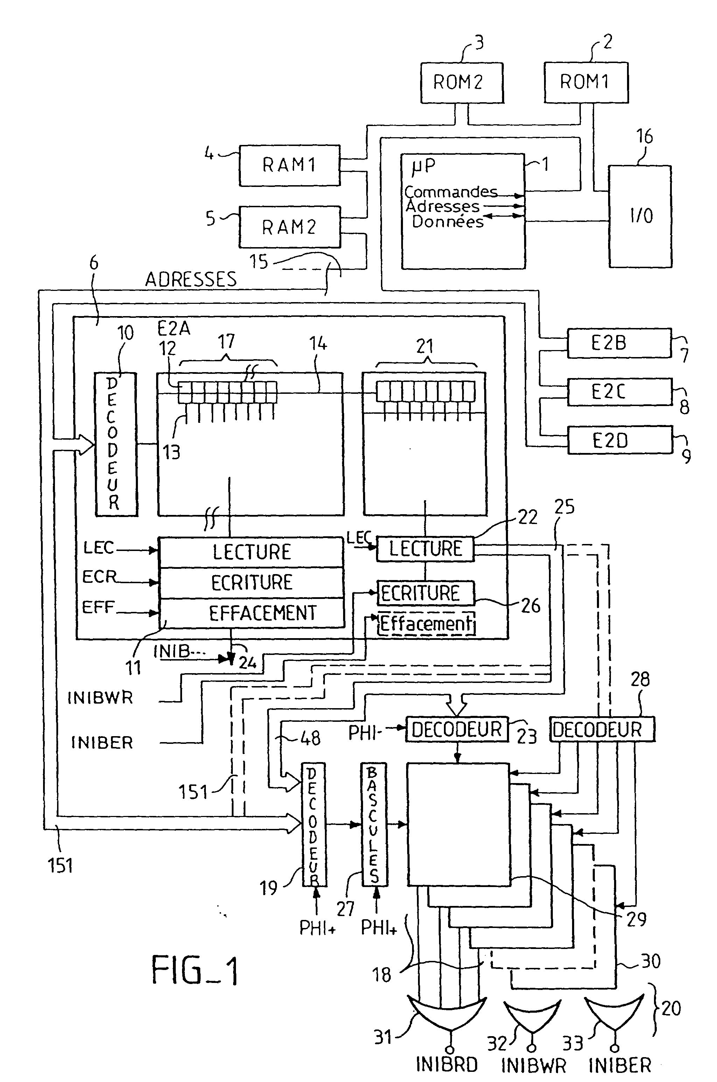

La figure 1 montre un dispositif de protection de l'accès à des mots mémoires d'un circuit intégré à microprocesseur. Le circuit intégré comporte de préférence tous les éléments représentés sur la figure 1. Ce circuit intégré comporte essentiellement un microprocesseur 1 et un ensemble de mémoires 2 à 9. La mémoire 2 et la mémoire 3 sont par exemple des mémoires à accès aléatoire qui ne peuvent être que lues. Elles servent par exemple à stocker respectivement des instructions du système d'exploitation du microprocesseur et des instructions d'une application principale, par exemple bancaire. Elles sont en principe non volatiles. Elles peuvent être programmées, à l'origine, par masque ou par opération spécifique lançable une seule fois.

Les mémoires 4 et 5 sont des mémoires volatiles, rapides, utilisées notamment pour stocker des instructions ou des données temporairement. Elles sont les mémoires vives de travail du microprocesseur. Elles sont à accès aléatoires. La mémoire 4 peut être destinée à stocker des instructions système, la mémoire 5 pouvant être destinée à stocker des instructions ou des données de l'application. Les mémoires 6 à 8 sont des mémoires à accès aléatoires, non volatiles, inscriptibles et effaçables électriquement. La mémoire 9 du même type n'est par exemple pas effaçable. Dans l'exemple, les mémoires 6 à 9 sont réalisées en une technologie de type EEPROM classique, ou EEPROM flash. C'est à dire avec des cellules mémoires comportant un transistor à grille flottante. Elles peuvent être cependant réalisées sous une forme de mémoire uniquement inscriptible électriquement de type EPROM.

Dans un exemple les mémoires 6 à 8 contiendront des jeux d'instructions destinés respectivement à des applications différentes: à des retraits automatiques de billets de banque, à l'octroi de crédits automatiques, ou au décomptage d'unités dans un porte-monnaie électronique. La mémoire 9 pourra être consacrée à des données. En pratique les mémoires 6 à 9 peuvent être de technologie, de topographies, et de tailles différentes. Elles peuvent cependant aussi être réalisées sur un même plan mémoire et être différenciées les unes des autres par une partition, notamment mais pas seulement une partition d'adressage. Par exemple, sans que cela soit une obligation, deux bits de mots de contrôle de cette mémoire renseignent par leur valeur de 0 à 3 sur des zones mémoires E2D et E2A à E2C respectivement auxquelles ils appartiennent. Dans ce cas les tailles de ces mêmes zones mémoires sont déterminées par un nombre de lignes de mots affectés des mêmes bits de contrôle. De plus les lignes de mots d'une zone ne sont pas nécessairement contigües. A l'intérieur des zones E2A à E2D il y a des sous-groupes où tous les octets de contrôle du sous groupe définissent ensemble un même mode de gestion des mots mémoire du sous groupe en ce qui concerne leur accès en lecture, écriture et effacement.

Chaque mémoire décrite ci-dessus comporte, comme uniquement représentée pour la mémoire 6 E2A un décodeur d'accès 10 recevant des signaux d'adresse et des circuits de lecture écriture effacement 11. Les cellules mémoires 12 de cette mémoire se trouvent situés à l'intersection de lignes de bits 13 et de lignes de mots 14 connectées à ce décodeur et à ce circuit 11.

Le dispositif de l'invention comporte également un bus 15 de transmission de données, d'adresses et de commandes entre le microprocesseur 1 et ses mémoires 2 à 9. Le bus de transmission peut également être relié à un périphérique d'entrée sortie 16 dont la gestion peut par ailleurs être assurée par le microprocesseur 1 ou par un microprocesseur externe.

Conformément à la demande de brevet français citée ci-dessus le circuit de protection de l'accès à des mots mémoires 17 du circuit intégré comporte une table de décision 18 et des circuits d'adressage 19 pour adresser cette table avec des adresses de ces mots mémoires. Ces adresses sont transmises par le bus 151 d'adresse à la table 18. En fonction de l'adressage effectué, la table de décision 18 produit des signaux qui sont combinés dans un circuit de protection 20 pour produire un signal de protection.

Selon l'invention certains mots à protéger, par exemple le mot 17 dans la mémoire 6, sont affectés d'un ensemble 21 de bits de contrôle. Un circuit de lecture 22 permet de lire ces bits de contrôle au moment (légèrement avant, légèrement après, ou normalement pendant) de l'accès à ce mot 17. Le circuit de lecture 22 délivre des signaux de lecture à un circuit d'adressage 23 pour adresser la table de décision 18 en fonction de la valeur des bits lus et qui correspondent à un mode de protection de ces mots. En définitive le signal de protection produit par le circuit de décision 18 est dépendant non seulement des adresses des codes opératoires mais aussi du mode de protection représenté par le mot de contrôle 21 qui est affecté aux mots à protéger.

Pour simplifier les opérations on retient comme architecture pour les mémoires 6 à 9 (il pourrait en être de même par ailleurs pour les mémoires 2 et 3 voire même pour les mémoires 4 et 5) la structure suivante. Les mots à protéger 17 sont accessibles par des lignes de bits 13 et des lignes de mots 14. De préférence on choisit de protéger un mot 17 par un mot 21 qui se trouve placé d'une part dans la même mémoire, et d'autre part sur la même ligne de mot que le mot à protéger. On aurait pu prévoir que tous les mots 21 soient placés dans une mémoire différente. Cependant, en agissant ainsi on bénéficie du décodage des lignes de mots inhérent au mot à protéger pour accéder en même temps au mot de contrôle de ce mot. Le circuit de lecture 22 peut même être combiné avec le circuit de lecture écriture effacement 11 de la partie principale de la mémoire.

Dans un exemple, dans une mémoire il y a 16 mots de 8 bits par lignes de mots; 15 mots sont utilisés pour stocker des informations à protéger, un seizième mot étant destiné à stocker les bits de contrôle. Dans une telle mémoire il existe un amplificateur de lecture, écriture, effacement en bout de chaque ligne de bit. Au moment du décodage, seuls sont connectés au bus de données 24 les amplificateurs de lecture des huit cellules sélectionnées en lecture. De même en écriture ou effacement. Dans l'invention, il existe un bus de données supplémentaire 25 qui achemine d'une manière systématique les bits de contrôle à la table de décision 18. En pratique le bus 25 a ici huit fils. Les amplificateurs de lecture des huit lignes de bits associées à ce mot de contrôle sont mis en service, à chaque accès, quel que soit le mot d'information auquel on accède sur une même ligne de mot.

Cette manière de faire a pour conséquence que plusieurs mots, ceux situés sur la ligne de mots 14 seront affectés d'un même mode de protection: le mot 21. Cette manière de faire conduit à un bon compromis entre la souplesse la plus grande possible et l'occupation en mémoire pour les mots de contrôle la plus faible possible. Le fait de grouper les mots appartenant à une même ligne 14 avec un même mode de protection, combiné au fait que le mot de contrôle est lui-même placé sur cette ligne de mot, par exemple en bout mais ça n'est pas une obligation, conduit à une solution particulièrement astucieuse. Comme on le verra par la suite la mémoire 6 peut comporter des circuits 26 pour écrire (de préférence on interdira d'effacer à l'utilisateur final) le mot de contrôle 21 sous certaines conditions.

En variante, et selon la complexité requise ou la constitution de la table 18, on peut choisir de réaliser l'accès à cette table 18 selon le système décrit dans la demande de brevet précitée. Dans ce cas, l'adresse du code instruction envoyée préalablement et décodée dans le décodeur 19 est stockée dans un jeu de bascules 27 connecté en entrée de la table 18. Le bus d'adresse est ensuite connecté, par le décodeur 23 à une autre entrée d'adresse de la table 18 pour décoder l'adresse du mot à protéger. La connexion en tirets du bus 151 montre cette possibilité. Dans ce cas les bits du mot de contrôle, disponibles sur le bus 25, sont envoyés à un décodeur supplémentaire 28 qui permet de choisir dans la table 18 une sous table parmi des sous tables possibles 29 à 30. Ces sous tables permettent de définir des modes de protection différents. En pratique toutes les sous tables peuvent être intégrées à une même table 18 qui possèderait dans ce cas un nombre plus important d'entrées de sélection.

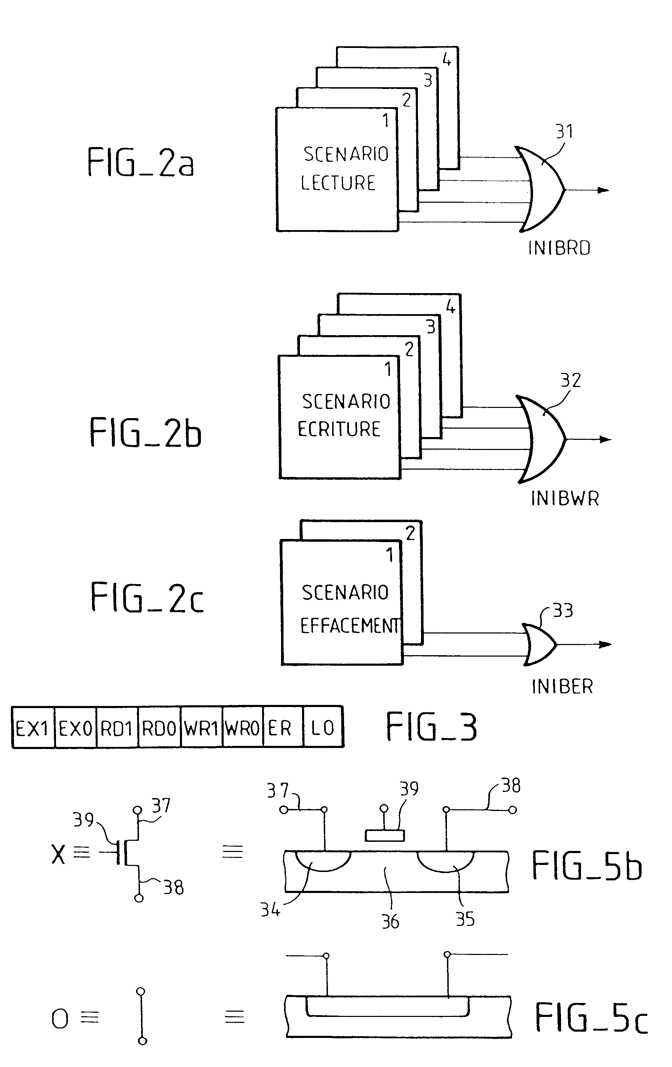

La figure 3 montre une allure préférée d'un mot de contrôle selon l'invention. Ce mot de contrôle comporte un octet. Deux de ses bits, par exemple les deux premiers notés EX1 et EX0, permettent de définir quatre situations. Quand ils vaudront 00 ceci signifiera que les informations contenues dans les mots contrôlés par ce mot de contrôle seront des données. S'ils valent 01, 10 ou 11 la signification sera que le mot contrôlé par ce mot de contrôle est une instruction appartenant aux mémoires 6 à 8 respectivement. En pratique ces deux bits peuvent ainsi constituer en tout ou partie l'adresse générale des instructions dans les mémoires 6 à 9 respectivement. Dans ce dernier cas, ces bits permettent en plus de définir dans une mémoire 6-9 unique des partitions de taille différentes comme évoqué ci-dessus. En outre ces tailles peuvent évoluer avec le temps. Il suffit de programmer en temps utile ces bits EX1 et EX0 avec les valeurs voulues.

Deux bits suivants , par exemple les bits RD1 et RD0 permettent de définir quatre scénarios en lecture. Deux autres bits WR1 et WR0 permettent de définir quatre scénarios en écriture. Enfin un bit ER permet de définir deux scénarios en effacement.

Les figures 2a à 2c montrent d'une manière schématique que des sous tables de décision correspondant aux quatre scénarios de lecture, aux quatre scénarios d'écriture ou aux deux scénarios d'effacement délivrent des signaux dans des portes OU respectivement 31 à 33. Ces portes permettent avec un seul signal d'autoriser ou non l'action projetée. Ainsi de préférence le circuit intégré de l'invention produira, figure 1, trois signaux représentatifs selon leur partie de l'autorisation ou l'interdiction: les signaux INIBRD, INIBWR et INIBER. De manière à éviter tout détournement les signaux INIBRD, INIBWR et INIBER seront acheminés par des connexions directes sur les organes du circuit intégré qu'ils contrôlent. Ils ne seront pas traités ou interprétés par le microprocesseur 1.

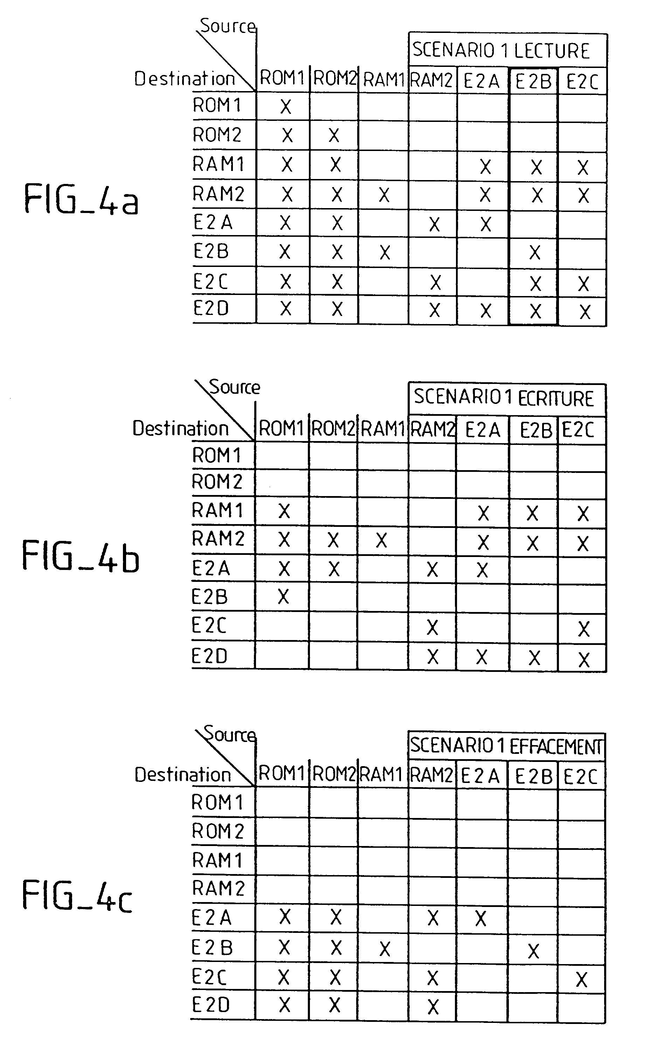

Les figures 4a à 4c montrent d'une manière schématique sous forme matricielle des scénarios respectivement en lecture, en écriture, en effacement.

La figure 4a montre le scénario 1 de lecture. Dans la ligne supérieure sont désignés, en tant que source, les origines possibles des codes instructions. Verticalement sont désignés, en tant que destination les mémoires où sont stockées les données et qui sont susceptibles d'être soumises à l'action (de lecture concernée par le scénario) en provenance d'une source. Les lignes et colonnes des matrices se croisent en des endroits où figurent les conséquences souhaitées. La présence des croix aux intersections signifie que l'action est autorisée. L'absence de croix signifie qu'elle est interdite. Ainsi une instruction de lecture (puisqu'il s'agit d'un scénario de lecture) provenant de la mémoire ROM1 pourra être effectuée sur le contenu de la mémoire ROM1 elle-même. C'est compréhensible pour que le système puisse fonctionner. De même les instructions de lecture en provenance de ROM1, instructions de type système, sont applicables à toutes les mémoires ROM2, RAM1, RAM2 jusqu'à E2D.

Par contre, s'agissant de la mémoire ROM2, deuxième colonne, on peut admettre qu'il est possible que ses instructions de lecture ne soient pas applicable au contenu de la mémoire ROM1: on ne peut pas lire ave une application le système d'exploitation du circuit intégré. Ainsi de suite. On a particulièrement mis en évidence les instructions en provenance de la mémoire E2B de lecture qui permettent de lire, entre autres les mémoires E2B E2C et E2D mais pas la mémoire E2A. Cet ensemble constitue un scénario de protection. On pourra conformément à ce qui a été dit précédemment définir trois autres scénarios de protection possédant éventuellement, selon leur rang par rapport au scénario présenté, plus ou moins de possibilités.

La figure 4b montre les mêmes éléments en ce qui concerne l'écriture. Bien naturellement on ne peut pas écrire dans les mémoires de type ROM. La signification de la colonne E2A est qu'avec une instruction en provenance de la zone E2A on peut d'une part écrire la mémoire vive RAM1 ou la mémoire centrale vive RAM2 dans le but de faire exécuter au microprocesseur en un cycle suivant les instructions ainsi chargées dans ces mémoires centrales. Mais on peut aussi vouloir, parce qu'on est en train d'incorporer une nouvelle application dans les mémoires programmes du circuit intégré, programmer, donc écrire, la mémoire E2A elle-même ou la mémoire E2D. Quand on voudra écrire la mémoire E2A on sera obligé de choisir les mots mémoire de la mémoire comportant dans le mot de contrôle associé les bits EX1 et EX0 et WR1 et WR0 adéquats. Là encore il y quatre scénarios d'écriture possibles.

La figure 4c représente un scénario d'effacement dans lequel en pratique chaque mémoire 6 à 8 n'est capable d'effacer que ses propres mots. Les mots mémoires de la mémoire E2D n'étant effaçables qu'à partir d'instructions provenant des mémoires ROM1, ROM2 ou RAM2.

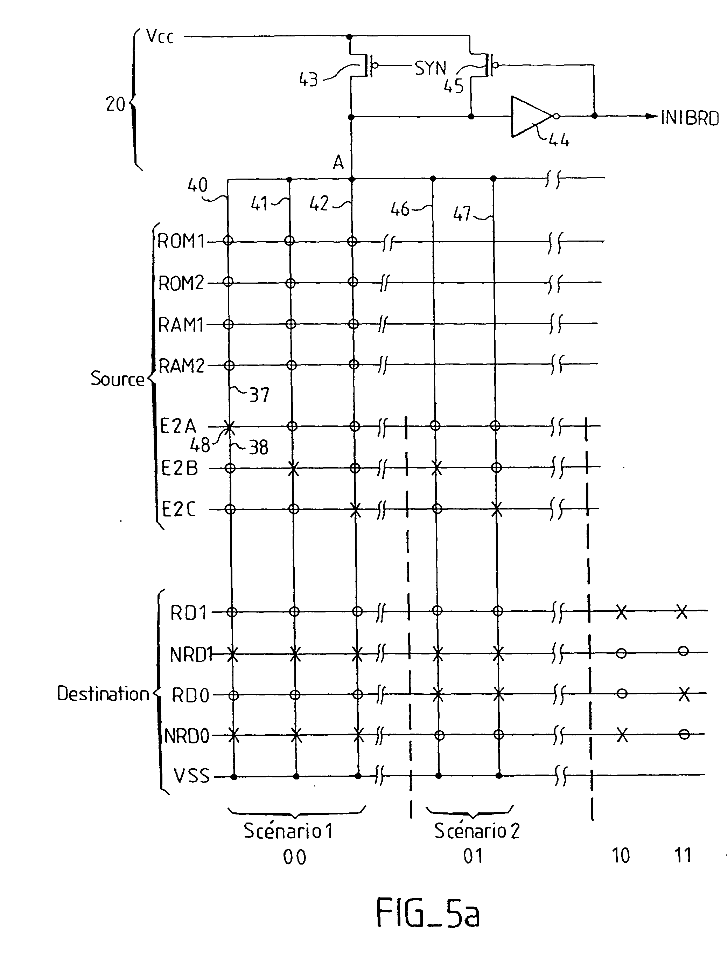

La figure 5a montre une manière de réaliser la table de décision 18 notamment pour la partie qui concerne la zone encadrée dans la figure 4a. Le fonctionnement est le suivant. L'adresse d'une instruction prélevée dans l'une quelconque des mémoires 2 à 9 est appliquée par le décodeur 19 sur le jeu de bascules 27 en entrée du circuit 18. En simplifiant on admettra qu'il y a une seule adresse possible par type de mémoire origine. Il serait cependant possible dans le décodeur 19 de prévoir autant de lignes qu'il y a de bits d'adresses possibles. Le décodeur 19, et donc le jeu de bascules 27, produisent en entrée de la table 18 un jeu de signaux sources représentatifs de la provenance de l'instruction concernée. En pratique une seule des sorties du jeu de bascule 27 est à l'état actif, par exemple 5 volt en logique positive, les autres étant à l'état 0.

A un cycle suivant, ou précédent ou en même temps, le bus d'adresse sélectionne par l'intermédiaire d'un décodeur 10 d'une des mémoires 2 à 9 un mot 17. Pour simplifier on va admettre que ce mot est lu à partir d'un ordre de lecture LEC reçu par le bus de commande relié au microprocesseur 1. On considérera que l'empêchement de lecture consiste à empêcher que le mot lu ne soit transmis sur le bus de donnée 24. L'ordre de lecture LEC met en oeuvre en même temps le circuit de lecture 22 pour lire le mot de contrôle 21 affecté au mot mémoire 17. Le circuit de lecture 22 en combinaison avec le décodeur 23 produisent les signaux RD1 et RD0 lus. Dans le décodeur 23 on peut transformer avec des inverseurs les signaux RD1 et RD0 en des signaux RD1 et NRD1 et RD0 et NRD0 respectivement. On dispose alors dans l'entrée de la table de décision 18 qui correspond au décodeur 23 de ces quatre signaux. Ils sont indiqués signaux destinations sur la figure 5a.

Le circuit représenté sur la figure 5a comporte un ensemble de connexions colonnes croisant un ensemble de connexions lignes. Aux intersections de ces lignes et de ces colonnes sont présentées respectivement des croix ou des ronds. Les croix représentent des transistors dont la figure 5b donne une représentation d'une part théorique et d'autre part réelle avec des zones diffusées dans un substrat. Le drain 34 et la source 35 de ces transistors assurent avec le canal de conduction 36 la continuité électrique des liaisons colonnes. Par exemple une liaison amont 37 est reliée à une connexion orientée vers le haut de la colonne, alors que l'autre liaison 38 est reliée à une connexion orientée vers le bas. A l'endroit où il y des petits ronds, la connexion est permanente, il n'y a pas de canal de conduction de transistor, le drain et la source du transistor sont mélangés. Une structure comme celle représentée sur la figure 5c est présente à l'endroit de ces ronds. Elle est obtenue, au moment de l'implantation des régions sources et drains du circuit intégré, en des endroits où il n'y a pas réalisation préalable par masquage d'une grille de commande 39 en surélévation. Les grilles 39 existantes sont reliées aux connexions lignes qui passent au-dessus d'elles sur le circuit intégré. La connexion verticale 40 montrée sur la figure 5a relie ainsi un noeud A à la masse VSS. Elle passe notamment par un transistor 48, du type de la figure 5b, commandé par un signal provenant de l'activation d'une adresse E2A et par des transistors recevant respectivement les signaux NRD1 et NRD0 actifs.

En pratique ces deux signaux actifs signifient que les bits RD1 et RD0 sont zéro et zéro: ils définissent le premier scénario. Autrement dit le mot protégé par le mot de contrôle a élu comme mode de protection en lecture le premier scénario.

La colonne 41 reliée dans les mêmes conditions entre le noeud A et la masse VSS possède un transistor en face de l'adresse mémoire E2B. De même la colonne 42 possède un transistor en face de l'adresse mémoire E2C. Ceci signifie, si on s'en tient là, que les mots protégeables par le scénario 1 ne peuvent être lus que par une instruction provenant des mémoires respectivement E2A, E2B ou E2C. Le scénario est cependant plus complet. On rajoute notamment dans le même scénario plusieurs connexions colonnes du même type comprenant un transistor en face de la source concernée. Il y a autant de connexions colonnes rajoutées que de source possibles.

Le circuit 20 de lecture de la table de décision 18 comporte dans un exemple un transistor 43 de type P relié par drain et source entre le potentiel d'alimentation VCC du circuit intégré et le noeud A. Ce transistor 43 est commandé de temps en temps par un signal de synchronisation SYN pour éviter de consommer en permanence. Le noeud A est par ailleurs relié à l'entrée d'un inverseur 44 dont la sortie, d'une part délivre le signal d'inhibition INIBRD et d'autre part est relié à la grille de commande d'un transistor P 45. Le transistor 45 est relié par drain et source entre VCC et l'entrée de l'inverseur 44.

Le fonctionnement de la table 18 est le suivant. Lorsque les signaux NRD1 et NRD0 sont à 1 et lorsqu'une des adresses mémoires E2A à E2C a été décodée, un des chemins 40 à 42 court-circuite le noeud A à la masse. Dans ces conditions le transistor 43, très résistif, débite et le potentiel du noeud A descend. Le signal INIBRD monte à 1: on a le droit de lire. Par contre si aucune des connexions 40 à 42 n'établit un chemin entre A et la masse le noeud A est au niveau haut et le signal INIBRD vaut 0. On n'aura pas le droit de lire.

Le scénario 1 peut être complété par un ensemble complémentaire de connexions avec réalisation adéquate de transistors aux endroits voulus. Le circuit correspondant au scénario 2 de lecture, défini pour des signaux RD1 RD0 valant 0 et 1 respectivement, est du même type. Son caractère restreint par rapport au scénario 1 est matérialisé par le fait qu'il comporte un chemin 46 de liaison entre le point A et la masse identique, pour la partie source, au chemin 41, et un chemin 47 identique dans les mêmes conditions au chemin 42. Par contre il ne comporte pas de chemin identique au chemin 40. Le caractère restrictif est donc matérialisé par un nombre de connexions moindre et, pour celles existantes, par une conformation identique à celle d'un scénario de rang hiérarchique supérieur. Bien entendu, on n'est pas obligé de choisir un tel mode hiérarchique mais pour des raisons de sécurité on comprendra son utilité. En ce qui concerne les scénarios 3 et 4 commandés par des signaux RD1 et RD0 valant 10 et 11 respectivement on applique un même raisonnement. On notera que la porte OU 31 est réalisée simplement en ayant un seul noeud A pour tous les scénarios.

Le scénario 1 ainsi montré en lecture est tout à fait transposable au cas de l'écriture ou même au cas de l'effacement. Il suffit de remplacer les entrées de signaux RD par des entrées de signaux WR ou ER respectivement. Dans le cas où il s'agit d'interdire la lecture, le signal INIBRD sera tout simplement directement appliqué à une entrée de validation de la connexion du circuit de lecture 11 au bus de données 24.

Le fonctionnement de la table de décision 18, dans le cas de la variante, conduit à modifier celle-ci pour introduire dans cette table de décision, par exemple en position moyenne entre les informations de source et de destination, des connexions lignes relatives aux adresses dans les mémoires 2 à 9 des mots mémoires auxquels on veut accéder. Aux intersections de ces connexions horizontales avec les connexions verticales telles que 40 à 41 et 46 et 47 on placerait ou non des transistors comme celui de la figure 5b.

Dans la version décrite cependant, les lignes E2A à E2C de la table de décision 18 de la figure 5a reçoivent des signaux correspondant au décodage des bits EX0 et EX1 du mot de contrôle. Pour le décodage des deux bits EX0 et EX1 le traitement est le suivant. On adresse un mot dans une mémoire 6 à 9. Si les deux bits EX0 et EX1 de son mot de contrôle sont 00, on est en présence d'une donnée et on envoie alors au décodeur 23 les autres bits RD1, RD0, WR1, WR0 et ER pour définir le mode de protection. Si ces deux bits EX0 et EX1 sont 01, 10 ou 11 on les envoie au décodeur 19. A un cycle suivant, leur traduction est introduite dans le jeu de bascules 27, en même temps qu'arrivent sur le décodeur 23 les bits de contrôle d'un mot suivant à protéger (et qui normalement est une donnée) et sur lequel en tous cas doit s'appliquer l'instruction lue au cycle précédent. La figure 5a montre la liaison 48 du bus 25 au décodeur 19 pour acheminer dans ce cas ces deux bits EX0 et EX1. Si le mot sur lequel doit s'appliquer le code instruction lu à un cycle précédent est un mot d'une mémoire E2A à E2C (cela signifie que ce mot est en principe lui-même un code opératoire d'instructions), on pourra lire, écrire ou effacer ce mot en fonction du mode de protection auquel il est soumis par le mot de contrôle qui lui est attribué.

Pour la modification du mot de contrôle lui-même, le circuit d'écriture 26 est piloté par un signal d'inhibition d'écriture INIBWR produit par la table de décision 18. On peut alors facilement modifier un mot de contrôle lui-même. Le fait de ne pas pouvoir effacer un mot de contrôle, en lui-même, conduit à ce que ses bits ne peuvent évoluer que vers un seul d'état: l'état programmé. On réalise ainsi l'évolution irréversible de permissivité évoquée ci-dessus. Mais on peut renoncer à cette faculté notamment pour les programmations effectuées par l'émetteur. Dans ce cas le circuit 26 comporte un circuit d'éffacement.

## Revendications

1. Dispositif de protection de l'accès à des mots mémoires d'un circuit intégré à microprocesseur qui comporte
- un microprocesseur (1),
- un ensemble de mémoires (2-9)comportant ces mots (17),
- un bus (15) de transmission de données, d'adresses et de commandes entre ce microprocesseur et ces mémoires,
- un circuit (18)de protection de l'accès à ces mots mémoires muni d'une table (18)de décision, de circuits (19, 23) d'adressage de cette table avec des adresses de ces mots mémoires, et d'un circuit (31-33) de protection pour produire un signal de protection en fonction de la lecture de la table de décision,
caractérisé en ce qu'il comporte
- affecté (14) à certains (17) mots à protéger un ensemble (21) de bits de contrôle,
- un circuit (22) pour lire ces bits de contrôle au moment (LEC) de la lecture de ces mots,
- un circuit (19,23,27,28) pour adresser la table de décision en fonction desdites adresses de mots mémoires et en fonction de la valeur des bits lus, qui permettent de choisir différents modes de protection dans la table.

2. Dispositif selon la revendication 1, caractérisé en ce que
- les mémoires comportent des lignes (13) de bits et des lignes (14) de mots et en ce que les bits (21) de contrôle affectés à un mot (17) sont mémorisés dans des cellules (12) mémoires placées sur la même ligne de mot que les cellules mémoires du mot à protéger.

3. Dispositif selon la revendication 1 ou la revendication 2, caractérisé en ce que
- les mémoires comportent des lignes (13) de bits et des lignes (14) de mots et en ce que
- plusieurs mots situés sur une même ligne (14) de mots sont protégés en accès selon un mode défini par un même ensemble (21) de bits de contrôle.

4. Dispositif selon l'une des revendications 1 à 3, caractérisé en ce que
- la table de décision (18) comporte trois sous tables (29-30) pour produire respectivement des signaux de protection en lecture en écriture et en effacement.

5. Dispositif selon l'une des revendications 1 à 4, caractérisé en ce que
- le circuit d'adressage de la table comporte des circuits (27, 23, 28) pour recevoir une adresse d'un premier mot, une adresse d'un deuxième mot et ledits bits de contrôle.

6. Dispositif selon l'une des revendications 1 à 5, caractérisé en ce que
- l'ensemble des mémoires contenant les mots à protéger est réalisé en un bloc de mots mémoire de technologies communes, et en ce que
- l'adresse d'un mot utilisée pour adresser la table de décision (18) comporte des bits du mot de contrôle affecté à un mot à protéger et auquel on veut accéder.

7. Dispositif selon l'une des revendications 1 à 5, caractérisé en ce que
- l'ensemble des mémoires est divisé en des blocs mémoires physiquement différenciées sur le circuit intégré et en ce que
- l'adresse d'un mot utilisée pour adresser la table de décision est constituée par les bits d'adresse de ces blocs mémoires.

8. Dispositif selon l'une des revendications 1 à 7, caractérisé en ce que
- les bits de contrôle comportent des bits relatifs au caractère d'instruction du mot à protéger, à son aptitude à être lu, écrit, ou effacé, ou encore au caractère modifiable de ces bits de contrôle eux mêmes.

9. Dispositif selon la revendication 8, caractérisé en ce que
- les mémoires comportent un circuit de modification des bits de contrôle dont le fonctionnement est conditionné par ledit signal de protection.

## Claims

1. Device for memory word access protection for a microprocessor integrated circuit which includes
- a microprocessor (1),
- a set of memories (2-9) containing the said words (17),
- a bus (15) for transmitting data, addresses and commands between the said microprocessor and the said memories,
- a circuit (18) for protecting access to the said memory words, provided with a decision table (18), circuits (19, 23) for addressing the said table with addresses of the said memory words, and a protection circuit (31-33) for producing a protection signal according to the reading of the decision table,
characterised in that it has
- allocated (14) to certain (17) words to be protected, a set (21) of control bits,
- a circuit (22) for reading the said control bits at the time (LEC) of reading these words,
- a circuit (19, 23, 27, 28) for addressing the decision table according to the said addresses of memory words and according to the value of the bits read, which make it possible to choose different protection modes in the table.

2. Device according to Claim 1, characterised in that
- the memories contain bit lines (13) and word lines (14) and in that the control bits (21) allocated to a word (17) are stored in memory cells (12) placed on the same word line as the memory cells of the word to be protected.

3. Device according to Claim 1 or Claim 2, characterised in that
- the memories contain bit lines (13) and word lines (14) and in that
- several words situated on one and the same word line (14) are access-protected according to a mode defined by one and the same set (21) of control bits.

4. Device according to one of Claims 1 to 3, characterised in that
- the decision table (18) contains three sub-tables (29-30) for producing respectively signals for protection in reading, writing and erasure.

5. Device according to one of Claims 1 to 4, characterised in that
- the table addressing circuit includes circuits (27, 23, 28) for receiving an address of a first word, an address of a second word and the said control bits.

6. Device according to one of Claims 1 to 5, characterised in that
- the set of memories containing the words to be protected is produced as a block of memory words with common technologies, and in that
- the address of a word used for addressing the decision table (18) includes bits of the control word allocated to a word to be protected and to which access is required.

7. Device according to one of Claims 1 to 5, characterised in that
- the set of memories is divided into memory blocks physically differentiated on the integrated circuit, and in that
- the address of a word used for addressing the decision table consists of the address bits of the said memory blocks.

8. Device according to one of Claims 1 to 7, characterised in that
- the control bits include bits relating to the instruction character of the word to be protected, to its ability to be read, written or erased, or to the modifiable character of these control bits themselves.

9. Device according to Claim 8, characterised in that
- the memories contain a circuit for modifying the control bits whose functioning depends on the said protection signal.

## Patentansprüche

1. Schutzvorrichtung gegen den Zugriff auf Speicherwörter einer integrierten Schaltung eines Mikroprozessors, die umfaßt:
- einen Mikroprozessor (1),
- eine Speichereinheit (2-9), die diese Wörter umfaßt (17),
- einen Bus (15) zum Übertragen von Daten, von Adressen und von Befehlen zwischen diesem Mikroprozessor und diesen Speichern,
- eine Schutzschaltung (18) gegen den Zugriff auf diese Speicherwörter mit einer Entscheidungstabelle (18), mit einer Adressierungsschaltung (19, 23) dieser Tabelle mit den Adressen der Speicherwörter, und mit einer Schutzschaltung (31-33) versehen, um in Abhängigkeit beim Lesen in der Entscheidungstabelle ein Schutzsignal zu erzeugen,
dadurch gekennzeichnet, daß
- an einigen Wörtern ein Satz (21) an Prüfbits zugewiesen wurden (14), daß die Vorrichtung umfaßt
- eine Schaltung (22) zum Lesen dieser Prüfbits in dem Moment (LEC), indem diese Wörter gelesen werden, und
- eine Schaltung (19, 23, 27, 28) zum Adressieren der Entscheidungstabelle in Abhängigkeit der Adressen der Speicherwörter und in Abhängigkeit des Wertes der gelesenen Bits, die die Wahl verschiedener Schutzmoden aus der Tabelle ermöglichen.

2. Vorrichtung nach Anspruch 1, dadurch gekennzeichnet, daß
- die Speicher Bitzeilen (13) und Wortzeilen (14) und daß die einem Wort (17) zugewiesenen Prüfbits (21) in den Speicherzellen (12) gespeichert sind, die auf derselben Wort zeile abgelegt sind, wie die Speicherzellen des zu schützenden Wortes.

3. Vorrichtung nach Anspruch 1 oder 2, dadurch gekennzeichnet, daß
- die Speicher Bitzeilen (13) und Wortzeilen (14) umfassen, und daß
- mehrere Wörter, die in derselben Wortzeile (14) abgelegt sind, gegen den Zugriff nach einem Modus geschützt sind, der durch einen gleichen Satz (21) an Prüfbits beschrieben wird.

4. Vorrichtung nach einem der Ansprüche 1 bis 3, dadurch gekennzeichnet, daß
- die Entscheidungstabelle (18) drei Untertabellen (29-30) umfaßt, um jeweils Schutzsignale zum Lesen, zum Schreiben und zum Löschen zu erzeugen.

5. Vorrichtung nach einem der Ansprüche 1 bis 4, dadurch gekennzeichnet, daß
- die Adressierungsschaltung der Tabelle Schaltungen (27, 23, 28) umfaßt, um eine Adresse eines ersten Wortes, eine Adresse eines zweiten Wortes und die Prüfbits zu erhalten.

6. Vorrichtung nach einem der Ansprüche 1 bis 5, dadurch gekennzeichnet, daß
- die Speichereinheit, die die zu schützenden Wörter enthält, in einem Block von Speicherwörtern in gleicher Technologie ausgeführt wird, und daß
- die Adresse eines verwendeten Wortes zum Adressieren der Entscheidungstabelle (18) Bits des Prüfwortes umfaßt, das einem zu schützenden Wort zugewiesen wurde und auf welches man zugreifen möchte.

7. Vorrichtung nach einem der Ansprüche 1 bis 5, dadurch gekennzeichnet, daß
- die Speichereinheit in physikalisch unterschiedlichen Speicherblöcken auf der integrierten Schaltung geteilt ist und daß
- die Adresse eines verwendeten Wortes zum Adressieren der Entscheidungstabelle durch die Adressenbits dieser Speicherblöcke gebildet wird.

8. Vorrichtung nach einem der Ansprüche 1 bis 7, dadurch gekennzeichnet, daß
- die Prüfbits die Befehlseigenschaft des zu schützenden Wortes betreffende Bits umfassen, die sich auf die Lese-, Schreib- oder Löschfähigkeit des zu schützenden Wortes oder auf die Änderungseigenschaft dieser Prüfbits beziehen.

9. Vorrichtung nach Anspruch 8, dadurch gekennzeichnet, daß
- die Speicher eine Änderungsschaltung der Prüfbits umfassen, wobei dessen Betrieb durch das Schützsignal bedingt wird.
